# EUROPÄISCHE PATENTANMELDUNG

(11) **EP 0 679 806 A2**
(43) Veröffentlichungstag der Anmeldung: **02.11.1995**
(21) Anmeldenummer: 95106208.2
(22) Anmeldetag: 25.04.1995
(51) Int. Cl.: F04B 43/113

(54) **Pumpe zum fördern von fliessfähigen, insbesondere pastösen Stoffen, insbesondere für ein medizinisches Labor**

(30) Priorität: 28.04.1994 DE 4414934
(71) Anmelder: KALTENBACH & VOIGT GMBH & CO., D-88400 Biberach (DE)
(72) Erfinder: Ernsberger, Klaus, Prof. Dipl.-Ing., D-88048 Friedrichshafen (DE)
(74) Vertreter: Schmidt-Evers, Jürgen, Dipl.-Ing.

(57) **Zusammenfassung**

Die Erfindung bezieht sich auf eine Pumpe (1) zum Fördern von fließfähigen, insbesondere pastösen Stoffen, insbesondere für ein medizinisches, vorzugsweise zahnärztliches Labor, mit einer Förderleitung (2), mit mehreren Förderelementen (24a bis 24c), die in Längsrichtung der Förderleitung (2) hintereinander angeordnet und quer zur Förderleitung (2) bewegbar sind und dabei jeweils wenigstens einen Teil des Förderleitungsvolumens verdrängen oder freigeben.

## Beschreibung

Die Erfindung bezieht sich auf eine Pumpe zum Fördern von fließfähigem, insbesondere pastösen Stoffen, wie z.B. Schlamm, Öl und Stoffe der chemischen Industrie oder erhärtende Stoffe, wie z.B. Gipsbrei, Beton oder dgl.

In der Technik sind zur Förderung von fließfähigen, insbesondere pastösen Stoffen Schneckenförderer, Schlauchpumpen und sogenannte Impellerpumpen bekannt. Diese Pumpen sind aus mehreren Gründen nachteilig. Zum einen sind sie verschleißempfindlich und zwar nicht nur bei höheren Förderdrücken, z.B. 3 bar und mehr, sondern auch aufgrund von durch den Stoff selbst und durch Verschmutzungen des Stoffes hervorgerufenem Verschleiß. Zum anderen können stückige Verschmutzungen im zu fördernden Stoff die Pumpenelemente beschädigen, blockieren und außer Funktion setzen. Ein weiterer Nachteil besteht darin, daß die bekannten Pumpen ein verhältnismäßig großes Pumpenleervolumen aufweisen, das insbesondere beim Pumpen aushärtender Stoffe zu großen Verlustvolumen führt.

Der Erfindung liegt die Aufgabe zugrunde, eine Pumpe zum Fördern von fließfähigen, insbesondere pastösen Stoffen zu finden, die von einfacher und kleiner Bauweise ist und ein geringes Pumpenvolumen aufweist.

Diese Aufgabe wird durch die Merkmale des Anspruchs 1 gelöst.

Bei der erfindungsgemäßen Pumpe ist eine Förderleitung durch mehrere Förderelemente begrenzt, die in der Längsrichtung der Förderleitung hintereinander angeordnet sind, quer zur Förderleitung bewegbar sind und dabei jeweils wenigstens einen Teil des Förderleitungsvolumens verdrängen oder freigeben.

Dabei kann es von Vorteil sein, bezüglich der Förderrichtung vor und/oder hinter den Förderelementen der Förderleitung Sperrventile zuzuordnen, die den Durchgang des Stoffes in der Förderrichtung freigeben und in der entgegengesetzten Richtung sperren. Hierdurch wird eine verlustfreie Arbeitsweise der Pumpe erreicht und somit deren Leistung vergrößert.

Bei einer anderen vorteilhaften Ausgestaltung weist der Arbeitsraum der Pumpe einen Ringraum auf, der nach außen durch ein Gehäuse der Pumpe und nach innen durch einen Kern begrenzt ist, wobei die Förderelemente durch Balgelemente jeweils in Form eines Ringes aus elastisch dehnbarem Material gebildet sind, die auf ihrer dem zu fördernden Stoff abgewandten Seite durch ein pneumatisches oder hydraulisches Druckmedium beaufschlagbar sind.

Dabei können die Balgelemente durch einen gemeinsamen Balg in Schlauchform gebildet sein, der durch Stützringe in Balgabschnitte unterteilt ist und an der Innenwandung des Gehäuses angeordnet ist, wobei zwischen den Balgabschnitten jeweils ein Stützring zur Halterung an der Innenwandung vorgesehen ist. Zwischen den Stützringen sind Druckleitungen vorgesehen, die das Gehäuse durchsetzen und in den Ringraum münden. Das Gehäuse ist durch zwei Stirnwände verschlossen, in denen jeweils eine oder mehrere Eingangs- und Ausgangsöffnungen angeordnet sind, die mit dem Ringraum verbunden sind.

Es ist im weiteren von Vorteil, die Förderelemente so anzuordnen, auszugestalten und/oder zu steuern, daß sie in ihren Endstellungen die Förderleitung jeweils völlig sperren oder völlig freigeben.

Es ist im weiteren auch von Vorteil, die Förderelemente und die Sperrventile identisch auszubilden, wobei sie sich nur durch ihre Funktion bzw. Steuerung unterscheiden.

Die Erfindung bezieht sich auch auf ein vorteilhaftes Arbeitsverfahren nach Anspruch 11 für den Betrieb einer Pumpe, mit dem eine große Leistung erreicht wird, wobei der Förderdurchgang in jeder Taktphase geschlossen ist und somit bei Druckpumpen ein Druckausgleich zwischen der Ansaug- und Druckseite verhindert ist. Die Erfindung ist jedoch auch bei Förderpumpen vorteilhaft, bei denen ohne Druckaufbau nur gefördert wird.

In den Unteransprüchen sind Merkmale enthalten, die zur Problemlösung beitragen, die Ausgestaltung und Funktion verbessern, die Lebensdauer weiter vergrößern und außerdem eine einfache und kostengünstige Herstellung insbesondere in Hinblick auf ein Massenprodukt gewährleisten.

Nachfolgend werden die Erfindung und weiter durch sie erzielbare Vorteile anhand von bevorzugten Ausgestaltungen und einer vereinfachten Zeichnung näher beschrieben. Es zeigt
- Fig. 1: eine erfindungsgemäße Pumpe im axialen Schnitt;
- Fig. 2 bis 4: jeweils ein Funktionsschema für eine erfindungsgemäße Pumpe mit drei Förderelementen und zwar Fig. 2 für Vorwärtsfördern, Fig. 3 für Rückwärtsfördern und Fig. 4 für Spülen;
- Fig. 5: eine erfindungsgemäße Pumpe in abgewandelter Ausgestaltung;
- Fig. 6: ein Funktionsschema für die Pumpe gemäß Fig. 5 für den Funktionsbetrieb Vorwärtsfördern.

Die Hauptteile der allgemein mit 1 bezeichneten Pumpe sind eine Förderleitung 2, mehrere, die Förderleitung 2 begrenzende Förderelemente 3a, 3b, 3c, die quer zur Längsrichtung der Förderleitung 2 hin und her bewegbar sind und dabei einen Teil des Förderleitungsvolumens verdrängen oder freigeben und eine Steuerungseinrichtung 4 zur Steuerung der Bewegungen der Förderelemente 3a bis 3c.

Im einzelnen weist die Pumpe 1 ein hohlzylindrisches Pumpengehäuse 5 auf, an deren Innenumfangswand die Förderelemente 3a bis 3c angeordnet und vorzugsweise rechtwinklig zur Längsmittelachse 6 des Pumpengehäuses 5 in den Arbeitsraum 7 des Pumpengehäuses 5 hinein und wieder heraus bewegbar sind.

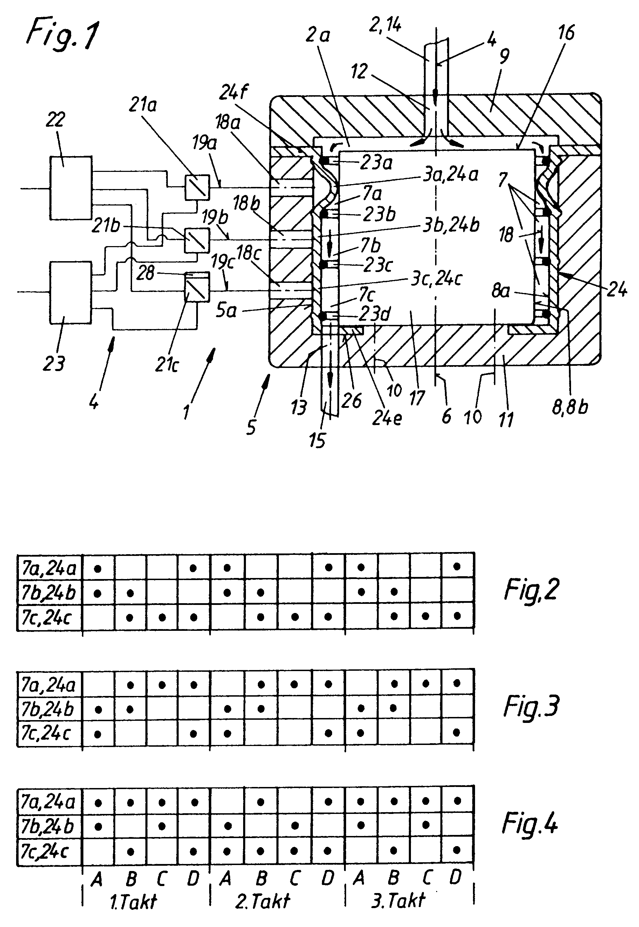

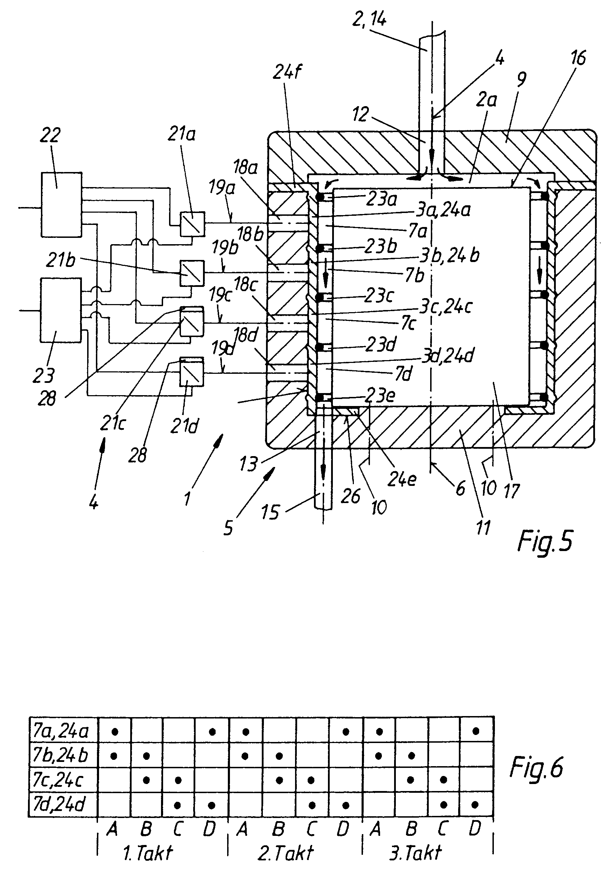

Bei der vorliegenden Ausgestaltung ist der Arbeitsraum 7 ein vorzugsweise konzentrisch zur Längsmittelachse 6 angeordneter Ringraum, der innen durch eine zylindrische Wandung 8 begrenzt ist, die im Pumpengehäuse 5 fixiert ist, so daß die Förderelemente 3a bis 3c gegen sie arbeiten können. Hierzu können Zapfen und/oder Schrauben dienen, die einen Deckel oder einen Boden des Pumpengehäuses 5 in passenden Löchern durchsetzen und in Fig. 1 und 5 durch Strichpunktlinien 10 angedeutet sind.

Bei der vorliegenden Ausgestaltung ist das Pumpengehäuse 5 durch eine Eingangs-Stirnwand 9 und eine Ausgangs-Stirnwand 11 als geschlossenes Gehäuse ausgebildet. wobei eine Eingangsöffnung 12 vorzugsweise mittig in der Stirnwand 9 und eine Ausgangsöffnung 13 in der Stirnwand 11 angeordnet sind. An die Eingangsöffnung 12 ist eine Zuführungsleitung 14 für das zu fördernde Mittel angeschlossen. An die Ausgangsöffnung 13 kann eine Abführungsleitung 15 angeschlossen sein, die bei der dargestellten Ausgestaltung in gerader Verlängerung des ringförmigen Arbeitsraums 7 angeordnet ist. Zwischen der Stirnwand 9 und der ihr gegenüberliegenden Stirnfläche 16 eines die zylindrische Wandung 8 bildenden hohlen oder vollen Zylinders 17 ist ein Abstand vorhanden, der einen radialen weiteren Förderleitungsabschnitt 2a zwischen der Eingangsöffnung 12 und dem Arbeitsraum 7 bildet. Zur Befestigung der Stirnwand 9 bzw. 11 am Gehäuse 5 oder des Zylinders 17 an der Stirnwand 11 können Schrauben vorgesehen sein.

Der ringförmige Arbeitsraum 7 weist drei in der Durchgangsrichtung 18 der Pumpe 1 hintereinanderliegende Arbeitskammern 7a, 7b, 7c auf, die außen jeweils vom zugehörigen Förderelement 3a bis 3c und innen von der zylindrischen Wandung 8 begrenzt sind. Vorzugsweise sind die Förderelemente 3a bis 3c jeweils durch einen Balg aus elastisch dehnbaren Material wie Gummi oder Kunststoff gebildet, der pneumatisch oder hydraulisch gegen die zylindrische Wandung 8 blähbar und wieder zurückbewegbar ist. Bei der vorliegenden Ausgestaltung erfolgen beide Bewegungen aktiv, indem der oder die Bälge wahlweise mit Überdruck oder Unterdruck gegenüber dem Druck der Saugseite des geförderten Mediums beaufschlagbar sind. Dieser kann auch Normaldruck sein, wenn die Saugseite infolge einer bestimmten Füllhöhe bereits Druck über Normaldruck aufweist. Hierzu dient jeweils ein Kanal 18a, 18b, 18c im Pumpengehäuse 5, an den eine Schlauch- oder Rohrleitung 19a, 19b, 19c angeschlossen ist, die durch jeweils ein Ventil 21a, 21b, 21c an einen Verteiler 22 oder 23 verbindbar ist, von denen der Verteiler 22 an eine Unterdruckquelle und der Verteiler 23 an eine Druckquelle angeschlossen sind.

Bei der vorliegenden Ausgestaltung ist für alle drei vorbeschriebenen Bälge ein gemeinsamer Balg 24 in Form eines Schlauches vorgesehen, der durch vier Stützringe 23a, 23b, 23c, 23d an der zylindrischen Innenwand 5a des Pumpengehäuses 5 gehalten oder vorgespannt ist. Zur Verbesserung der Halterung können in Höhe der Stützringe 23a bis 23c im Querschnitt vorzugsweise gerundete Ringnuten in der zylindrischen Innenwandung 5a vorgesehen sein, in die der gemeinsame Balg hineingedrückt ist. Durch die Stützringe 23a bis 23c sind drei Balgelemente 24a bis 24c gebildet, die wahlweise mit Druck oder Unterdruck beaufschlagbar sind.

Zur weiteren Verbesserung der Halterung des gemeinsamen Balges erstreckt sich dieser nicht nur bis zu den Stirnwänden 9, 11, sondern er erstreckt sich einstückig mit einem radialen Flansch 24f zwischen das Pumpengehäuse 5 und die Stirnwand 9 und außerdem ist an der Stirnwand 11 ein Innenflansch 24e angeordnet, der in einer Ausnehmung 26 der Stirnwand 11 versenkt angeordnet sein kann. Hierdurch erhält der gemeinsame Balg eine zusätzliche formschlüssige Halterung, die seine Positionierung zusätzlich zu den Stützringen 23a bis 23c stabilisiert.

Im folgenden wird die Funktion der Pumpe 1 anhand bevorzugter Arbeitsverfahren beschrieben. Wie Fig. 2 zeigt, sind horizontal hintereinander liegend drei Funktions-Takte 1., 2. und 3. dargestellt jeweils mit Taktphasen A, B, C und D, wobei die Takte bzw. Taktphasen einander gleich und somit Wiederholungen eines Taktes sind.

In der schematischen Darstellung bedeuten die rechteckigen Kästchen jeweils eine Arbeitskammer 7a, 7b, 7c der zugehörigen Balgelemente 24a, 24b, 24c.

Ausgehend von der letzten Taktphase D eines Taktes werden zur Herbeiführung der Taktphase A das Balgelement 24b vorbewegt (wie es in Fig. 1 dargestellt ist) und zugleich das Balgelement 24c zurückbewegt, wobei das Volumen aus der Arbeitskammer 7b in die Arbeitskammer 7c gelangt, jedoch keine Förderung stattfindet, weil die Arbeitskammer 7c gefüllt wird.

Zur Herbeiführung der Taktphase B wird das Balgelement 24c vorbewegt, wobei ein Kammervolumen, nämlich das der Kammer 7c gefördert wird. Vorzugsweise gleichzeitig wird das Balgelement 24a zurückbewegt, wobei ein der Arbeitskammer 7a entsprechendes Volumen nachgesaugt wird.

Zur Herbeiführung der Taktphase C wird das Balgelement 24b zurückbewegt, wobei ein entsprechendes weiteres Kammervolumen nachgesaugt wird und das Balgelement 24c vorbewegt bleibt und somit der Durchgang gesperrt ist.

Zur Herbeiführung der Taktphase D wird das erste Balgelement 24a vorbewegt, wobei ebenfalls keine Förderung stattfindet, da das letzte Balgelement 24c vorbewegt bleibt.

Die Herbeiführung der nächsten Taktphase A ist bereits beschrieben worden.

Die Bedrückung und Entlastung der Balgelemente 24a bis 24c erfolgt jeweils durch das zugehörige ansteuerbare Zweiwegeventil 21a bis 21c pro Balgelement, wobei das Zweiwegeventil jeweils die beiden Aktivierungszustände steuert, nämlich
den Bedrückungszustand des Balgelments, indem das Ventil 21 über einen möglichst kurzen Leitungsweg ein Druckmedium (Druckluft, Drucköl) über den zugehörigen Verteiler 23 auf das zugehörige Balgelement 24a bis 24c führt, wobei die zugehörige Entlastungsleitung zum Verteiler 22 hierbei geschlossen ist, und den Entlastungszustand, in dem das Ventil 21 über den Verteiler 22 den auf das zugehörige Balgelement wirksamen Druck entspannt, wobei das Balgelement aufgrund seiner Elastizität selbsttätig zurückbewegt wird, oder mit der Unterdruckseite verbindet, wobei das Balgelement aktiv zurückbewegt wird. Die zugehörige Druckleitung zwischen dem Ventil 21 und dem Verteiler 23 ist hierbei geschlossen.

Wie sich aus Fig. 3 Klar entnehmen läßt, erfolgt ein Rückwärtsfördern durch eine Funktionsumkehrung, d.h. die Balgelemente 24a bis 24c werden in umgekehrter Weise aktiviert, was die in Fig. 3 erkennbare spiegelbildliche Aktivierung der Balgelemente 24a bis 24c verdeutlicht.

Für einen Spülvorgang kann die Pumpe 1 in gleicher Weise wie für das vorbeschriebene Vorwärtsfördern und Rückwärtsfördern gesteuert werden, wobei ein flüssiges Spülmittel in die Pumpe 1 eingeführt und entsprechend gefördert wird.

Fig. 4 zeigt eine Abwandlung eines Spülvorgangs. Wie der 1. Takt zeigt, entsprechen die Taktphasen A und D den Taktphasen A und D beim Vorwärtsfördern nach Fig. 2. Dagegen unterscheiden sich die Spül-Taktphasen B und C dadurch, daß zur Herbeiführung der Taktphase B das Balgelement 24b zurückbewegt wird und das Balgelement 24c gleichzeitig vorbewegt wird und zur Herbeiführung der Taktphase C das Balgelement 24b vorbewegt wird und gleichzeitig das Balgelement 24c zurückbewegt wird. Zur Herbeiführung der Taktphase D wird wiederum das Balgelement 24b zurückbewegt und gleichzeitig das Balgelement 24c vorbewegt. Dabei bleibt das Balgelement 24a immer vorbewegt, also geschlossen.

Beim nächsten Takt (siehe 2. Takt) erfolgt die Steuerung der Balgelemente in spiegelbildlicher Anordnung, so daß das Balgelement 24c immer geschlossen bleibt und die anderen beiden Balgelemente wechselseitig vor- und zurückbewegt werden.

Die Steuerung im 3. Takt entspricht der Steuerung im 1. Takt.

Bei dem vorbeschriebenen Vorgang Spülen erfolgt somit keine Förderung des Spülmittels, sondern lediglich eine Reinigung der Kammerwände durch eine aktive Bewegung der Balgelemente wie vorbeschrieben.

Bei einer Anordnung von vier Balgelementen gemäß Fig. 5 lassen sich pro Takt zwei Balgvolumen fördern, siehe Taktphasen B und C. Diese Pumpe 1 unterscheidet sich dadurch, daß folgende weitere Teile vorgesehen sind, nämlich ein Balgelement 24d, ein Kanal 18d, eine Schlauch- oder Rohrleitung 19d, ein Ventil 21d und zwei weitere, letzteres mit dem jeweils zugehörigen Verteiler 22, 23 verbindende Leitungen.

Ausgehend von der Taktphase D, bei der die Balgelemente 24a und 24d vorbewegt sind, werden zur Herbeiführung der Taktphase A das Balgelement 24b geschlossen und gleichzeitig das Balgelement 24d geöffnet, wobei keine Förderung, sondern lediglich ein Ausgleich der Balgvolumen erfolgt.

Zur Herbeiführung der Taktphase B werden das Balgelement 24a zurückbewegt und gleichzeitig das Balgelement 24c vorbewegt, wobei ein Balgvolumen gefördert wird und gleichzeitig ein Balgvolumen nachgesaugt wird.

Zur Herbeiführung der Taktphase C wird das Balgelement 24b zurückbewegt und gleichzeitig das Balgelement 24d vorbewegt, wobei ein weiteres Balgvolumen gefördert und zugleich ein Balgvolumen nachgesaugt werden.

Zur Herbeiführung der Taktphase D werden dann das Balgelement 24c zurückbewegt und das Balgelement 24a vorbewegt, wobei ein Ausgleich der Balgvolumen stattfindet.

Wie die Aktivierungsschemen zeigen, ist die Druck- und die Ansaugseite der Pumpe 1 immer durch mindestens ein vorbewegtes Balgelement 24a bis 24d getrennt, so daß in keiner Phase ein Druckausgleich zwischen der Druck- und der Ansaugseite des geförderten Mediums erfolgen kann. Die Balgelemente haben somit nicht nur eine Förderfunktion, sondern auch eine Schließventilfunktion.

Der Förderdruck der Pumpe 1 liegt immer unter dem Arbeitsdruck der Balgbedrückung. Im Gegensatz zu allen anderen Pumpenarten läßt sich der Förderdruck jedoch über den Arbeitsdruck beliebig steigern, sofern Festigkeit und Formstabilität des Balges 24 bzw. der Balgelemente 24a bis 24d dies erlauben, da mit dem Arbeitsdruck auch die Dichtwirkung steigt.

Die erfindungsgemäße Pumpe 1 gestattet auch eine Dosierung des geförderten Mediums bzw. eine Überwachung der Fördermenge durch Zählung der Balgbedrückungen. Die Dosier- bzw. Fördermenge eines Ausstoßes (Balgfördervolumen) ist vor allem bei niederviskosen Flüssigkeiten sehr gut reproduzierbar, so daß sich die Dosiermenge bei niederen Pumpfrequenzen über die Zählung der Balgbedrückungen ableiten läßt. Bei höheren Viskositäten und bei höheren Pumpfrequenzen sinkt die Dosier- bzw. Fördermenge je Balgbedrückung, so daß eine frequenzabhängige Eichung von Vorteil ist. Für eine Dosierung ist der allgemein mit 4 bezeichneten Steuervorrichtung eine entsprechende Dosiervorrichtung z.B. mit einer Zähleinrichtung 28 für die förderwirksamen Balgelemente (Balgelement 24c beim Ausführungsbeispiel gemäß Fig. 2 und Balgelemente 24c und 24d bei Ausführungsbeispiel gemäß Fig. 5) zuzuordnen. Die Zähleinrichtung kann z.B. dem zugehörigen Ventil 21c (Fig. 2) oder 21c, 21d (Fig. 5) oder der oder den Leitungen 18c oder 19c bzw. 18 c, 19c und 18d, 19d zugeordnet sein.

Im Rahmen der Erfindung ist es möglich die Taktphase D zu erübrigen, wenn beim Ausführungsbeispiel nach Fig. 1 zur Einleitung der Taktphase C jeweils zugleich das Balgelement 24a vorbewegt wird.

Das Gehäuse 5, die Stirnwände 9, 11 und die Stützringe 23a bis 23d können aus Kunststoff oder Metall, insbesondere korrosionsbeständig, bestehen.

## Patentansprüche

1. Pumpe (1) zum Fördern von fließfähigen, insbesondere pastösen Stoffen, insbesondere für ein medizinisches, vorzugsweise zahnärztliches Labor, mit einer Förderleitung (2), mit mehreren Förderelementen (24a bis 24d), die in Längsrichtung der Förderleitung (2) hintereinander angeordnet und quer zur Förderleitung (2) bewegbar sind und dabei jeweils wenigstens einen Teil des Förderleitungsvolumens verdrängen oder freigeben.

2. Pumpe nach Anspruch 1,
**dadurch gekennzeichnet**,
daß die Förderelemente (3a bis 3d) durch Balgelemente (24a bis 24d) aus elastisch dehnbarem Material, insbesondere Kunststoff oder Gummi, gebildet sind, die auf ihrer den zu fördernden Stoff abgewandten Seite durch ein pneumatisches oder hydraulisches Druckmedium beaufschlagbar sind.

3. Pumpe nach Anspruch 2,
**dadurch gekennzeichnet**,
daR die Balgelemente (24a bis 24d) die Form eines vorzugsweise runden Ringes aufweisen.

4. Pumpe nach einem der vorherigen Ansprüche,
**dadurch gekennzeichnet**,
daß der Arbeitsraum (7) der Pumpe (1) ein Ringraum ist und die Förderelemente (3a bis 3d) der inneren Wandung (8b) oder vorzugsweise der äußeren Wandung (8a) des Arbeitsraums (7) zugeordnet bzw. daran angeordnet sind.

5. Pumpe nach Anspruch 4,
**dadurch gekennzeichnet**,
daß sie ein vorzugsweise hohlzylindrisches Gehäuse (5) aufweist, in dem ein vorzugsweise zylindrischer Kern (17) angeordnet ist, wobei zwischen dem Gehäuse (5) und dem Kern ein den Arbeitsraum (7) bildender Ringraum vorgesehen ist.

6. Pumpe nach Anspruch 5,
**dadurch gekennzeichnet**,
daß das Gehäuse (5) eine vorzugsweise radiale Eingangs- Stirnwand (9) und eine Ausgangs-Stirnwand (11) aufweist, in denen wenigstens eine, insbesondere die Ausgangs-Stirnwand 11 einstückig ausgebildet ist und die andere Stirnwand (9) lösbar befestigt ist, insbesondere durch Schrauben.

7. Pumpe nach Anspruch 6,
**dadurch gekennzeichnet**,
daß die Eingangs-Stirnwand (9) eine vorzugsweise zentrale Eingangsöffnung (12) und einen radialen Verbindungskanal zum Arbeitsraum (7), insbesondere einen axialen Abstand vom Kern (17) aufweist.

8. Pumpe nach einem der vorherigen Ansprüche,
**dadurch gekennzeichnet**,
daß wenigstens zwei Balgelemente, vorzugsweise alle Balgelemente (24a, 24d) durch einen gemeinsamen Balg (24) in Schlauchform gebildet sind, wobei jeweils zwischen zwei Balgelementen ein Stützelement, vorzugsweise in Form eines Stützringes (23a, 23d) zur Halterung des Balges (24) an der ihm zugeordneten Wand (8a, 8b) vorgesehen ist.

9. Pumpe nach Anspruch 8,
**dadurch gekennzeichnet**,
daß in der Wand (5a), an der der Balg (24) in seiner Neutralstellung anliegt, vorzugsweise gerundete Ringnuten in der Ebene der Stützelemente angeordnet sind.

10. Pumpe nach einem der vorherigen Ansprüche,
**dadurch gekennzeichnet**,
daß der Balg (24) an einem oder an beiden freien Rändern jeweils einen Innen- oder Außenflansch (24d, 24e) aufweist, mit denen er formschlüssig in eine Ausnehmung (26) und/oder zwischen dem Gehäuse (5) und einer zugehörigen Stirnwand (9, 11) angeordnet und vorzugsweise eingespannt ist.

11. Verfahren zum Pumpen von fließfähigen, insbesondere pastösen Stoffen mit mehreren, vorzugsweise wenigstens drei Förderelementen (3a bis 3c), die einen Arbeitsraum (7) begrenzen und in Taktphasen (A bis D) mittels einer Steuereinrichtung (4) zwischen einer den Arbeitsraum (7) freigebenden Stellung und einer in ihn vorgeschobenen und ihn bezüglich seines Förderdurchgangs schließenden Stellung hin und her bewegbar sind, wobei die Förderelemente (3a bis 3c) so gesteuert werden, daß in jeder Taktphase (A bis D) der Förderdurchgang durch wenigstens ein Förderelement (3a bis 3c) geschlossen ist.

12. Verfahren nach Anspruch 11,
**dadurch gekennzeichnet,**
daß bei einer Anordnung von drei hintereinander liegenden Förderelementen (3a bis 3c) ausgehend von der letzten Taktphase (D) eines Taktes, in der sich das erste und das dritte Förderelement (3a, 3c) in ihren vorgeschobenen Stellungen befinden, zur Einleitung der ersten Taktphase (A) des nächsten Taktes das erste Förderelement (3a) in seiner vorgeschobenen Stellung belassen wird, das zweite Förderelement (3b) vorgeschoben wird und das dritte Förderelement (3c) vorzugsweise gleichzeitig zurückgezogen wird, zur Einleitung der nächsten Taktphase (B) das dritte Förderelement (3c) vorgeschoben wird und vorzugsweise gleichzeitig das erste Förderelement (3a) zurückgezogen wird, während das zweite Förderelement (3b) in seiner vorgeschobenen Stellung belassen wird, in einer weiteren Taktphase (C) das dritte Förderelement (3c) in seiner vorgeschobenen Stellung belassen wird, während das zweite Förderelement (3b) zurückgezogen wird und gleichzeitig oder zur Herbeiführung einer letzten Taktphase (D) das erste Förderelement (3a) vorgeschoben wird.

13. Verfahren nach Anspruch 11,
**dadurch gekennzeichnet,**
daß bei einer Anordnung von vier in Förderrichtung hintereinander liegenden Förderelementen (3a bis 3d) ausgehend von der letzten Taktphase (D) eines Taktes, in der das erste und das letzte Förderelement (3a, 3d) vorgeschoben sind, während das zweite und das dritte Förderelement (3b, 3c) zurückgezogen sind, zur Herbeiführung der ersten Taktphase (A) des nächsten Taktes das erste Förderelement (3a) in seiner vorgeschobenen Stellung belassen wird, das zweite Förderelement (3b) vorgeschoben wird, das dritte Förderelement (3c) in seiner zurückgezogenen Stellung belassen wird und das vierte Förderelement (3d) zurückgezogen wird, jeweils zur Einleitung der nächsten Taktphase (B bis D) das vordere (3b, 3c, 3d) der beiden jeweils vorgeschobenen Förderelemente in seiner vorgeschobenen Stellung belassen wird, das diesem Förderelement vorgeordnete Förderelement (3b, 3c, 3a) jeweils vorgeschoben wird und das diesem Förderelement nachgeordnete Förderelement (3a, 3b, 3c) vorzugsweise gleichzeitig zurückgezogen wird.
